(19) Europäisches Patentamt
European Patent Office
Office européen des brevets

(11) **EP 3 432 575 A1**

(12) **EUROPEAN PATENT APPLICATION**

(43) Date of publication:
   **23.01.2019 Bulletin 2019/04**

(51) Int Cl.:
   **H04N 7/18** (2006.01)      **G06K 9/00** (2006.01)
   **G06K 9/62** (2006.01)      **G06T 7/292** (2017.01)

(21) Application number: **17204266.5**

(22) Date of filing: **29.11.2017**

(84) Designated Contracting States:
   **AL AT BE BG CH CY CZ DE DK EE ES FI FR GB
   GR HR HU IE IS IT LI LT LU LV MC MK MT NL NO
   PL PT RO RS SE SI SK SM TR**
   Designated Extension States:
   **BA ME**
   Designated Validation States:
   **MA MD**

(30) Priority: **20.07.2017  US 201715654736**

(71) Applicant: **Synology Incorporated
   Taipei 103 (TW)**

(72) Inventors:
   • **Yang, Di-Kai
      103 Taipei (TW)**
   • **Shao, Wen-Hao
      103 Taipei (TW)**
   • **Hsu, Shuo-Fang
      103 Taipei (TW)**
   • **Lee, Szu-Hsien
      103 Taipei (TW)**

(74) Representative: **Lahrtz, Fritz
   Isenbruck Bösl Hörschler LLP
   Patentanwälte
   Prinzregentenstraße 68
   81675 München (DE)**

(54) **METHOD FOR PERFORMING MULTI-CAMERA AUTOMATIC PATROL CONTROL WITH AID OF STATISTICS DATA IN A SURVEILLANCE SYSTEM, AND ASSOCIATED APPARATUS**

(57)    A method for performing multi-camera automatic patrol control with aid of statistics data in a surveillance system (10) and an associated apparatus are provided. The method includes: utilizing any camera of a plurality of cameras to capture a plurality of reference images along a plurality of capturing directions of the camera, and performing image analysis operations on the reference images to generate statistics data; performing importance estimation operations according to the statistics data to generate a plurality of importance estimation values respectively corresponding to the capturing directions; selecting one of the capturing directions as a predetermined scheduling direction of the camera according to the importance estimation values; and during a time interval of a plurality of time intervals of a scheduling plan, controlling the camera to capture a series of images along the predetermined scheduling direction to monitor the predetermined scheduling direction.

FIG. 1

**Description**

Field of the Invention

The present invention relates to intelligent scheduling, and more particularly, to a method for performing multi-camera automatic patrol control with aid of statistics data in a surveillance system, and an associated apparatus.

Background of the Invention

Scheduling control of a surveillance system in the related art typically relies on manual settings, and the user typically needs to spend a lot of time on completing the manual settings. More specifically, in a large factory, hundreds of cameras may be deployed. Some important locations may be even covered by two or more cameras to make sure critical event(s) will not be missed. Setting hundreds of cameras by a security personnel is time consuming and it will be more difficult to test whether the cameras are shooting the right places at the right time.

In addition, some further problems may occur. For example, although there may be multiple cameras in this surveillance system, each of the cameras may rotate in its own way, and there may still be unmonitored regions. In another example, although there may be multiple cameras in this surveillance system, the surveillance system may still miss the chances of recording important events.

Some technologies may use the object tracking mechanism to address this issue. Specifically, a current imaging system is able to convert live video into a sequence of digital images which can be processed from frame to frame to track any moving object in the video. However, to process live streams and to analyze by frames are computationally expensive tasks and may need specialized hardware.

Another type of tracking technologies may use specialized cameras, such as infrared cameras, which may track the objects with the aid of infrared radiated therefrom (e.g. the infrared radiation from hot bodies). This lively tracking also needs a lot of computation and specialized hardware. Thus, a novel method and associated architecture are required for enhancing the overall performance of the surveillance system without requiring high computation ability.

Summary of the Invention

This in mind, the application aims at providing a method and associated apparatus for performing multi-camera automatic patrol control in order to solve the problems mentioned above.

This is achieved by a method of and associated apparatus according to claims 1 and 2. The dependent claims pertain to corresponding further developments and improvements.

As will be seen more clearly from the detailed description following below, the claimed method can be applied to the surveillance system, and the surveillance system includes a plurality of cameras. The method may include: utilizing any camera of the plurality of cameras to capture a plurality of reference images along a plurality of capturing directions of the camera, respectively, and performing image analysis operations on the plurality of reference images to generate statistics data, in which at least one portion of data within the statistics data is related to events that the surveillance system detects through the camera; performing importance estimation operations according to the statistics data to generate a plurality of importance estimation values respectively corresponding to the plurality of capturing directions, in which the plurality of importance estimation values indicates degrees of importance of the plurality of capturing directions, respectively; selecting one of the plurality of capturing directions as a predetermined scheduling direction of the camera according to the plurality of importance estimation values; and during a time interval of a plurality of time intervals of a scheduling plan, controlling the camera to capture a series of images along the predetermined scheduling direction to monitor the predetermined scheduling direction.

In addition, the claimed apparatus can be applied to the surveillance system, and the surveillance system includes a plurality of cameras. The apparatus may include a processing circuit that is arranged to control operations of the surveillance system, in which controlling the operations of the surveillance system may include: utilizing any camera of the plurality of cameras to capture a plurality of reference images along a plurality of capturing directions of the camera, respectively, and performing image analysis operations on the plurality of reference images to generate statistics data, in which at least one portion of data within the statistics data is related to events that the surveillance system detects through the camera; performing importance estimation operations according to the statistics data to generate a plurality of importance estimation values respectively corresponding to the plurality of capturing directions, in which the plurality of importance estimation values indicates degrees of importance of the plurality of capturing directions, respectively; selecting one of the plurality of capturing directions as a predetermined scheduling direction of the camera according to the plurality of importance estimation values; and during a time interval of a plurality of time intervals of a scheduling plan, controlling the camera to capture a series of images along the predetermined scheduling direction to monitor the predetermined scheduling direction.

Brief Description of the Drawings

In the following, the invention is further illustrated by way of example, taking reference to the accompanying drawings. Thereof:

Fig. 1 is a diagram of a surveillance system according to an embodiment of the present invention;

Fig. 2 is a flowchart of a method for performing multi-camera automatic patrol control with aid of statistics data in a surveillance system according to an embodiment of the present invention;

Fig. 3 illustrates some spots indicating candidate capturing directions of a camera controlled with the method shown in Fig. 2 according to an embodiment of the present invention;

Fig. 4 illustrates an event statistics control scheme of the method shown in Fig. 2 according to an embodiment of the present invention;

Fig. 5 illustrates some spots indicating candidate capturing directions of a camera controlled with the method shown in Fig. 2 according to another embodiment of the present invention;

Fig. 6 illustrates an event statistics control scheme of the method shown in Fig. 2 according to another embodiment of the present invention;

Fig. 7 illustrates some candidate monitoring regions of a camera controlled with the method shown in Fig. 2 according to an embodiment of the present invention;

Fig. 8 illustrates some candidate monitoring regions of another camera controlled with the method shown in Fig. 2 according to the embodiment shown in Fig. 7;

Fig. 9 illustrates some spatial sampling points of an importance calculation model of the method shown in Fig. 2 according to an embodiment of the present invention; and

Fig. 10 illustrates some monitoring regions regarding a selected combination according to an embodiment of the present invention.

Detailed Description

Embodiments of the present invention provide a method for performing multi-camera automatic patrol control with aid of statistics data in a surveillance system, and provide an associated apparatus. The surveillance system may include a plurality of cameras, and the cameras may have some functions of remote directional and zoom control. Examples of the cameras may include, but are not limited to: pan-tilt-zoom (PTZ) cameras. The method and the associated apparatus may be applied to the surveillance system, and may perform estimation and prediction to properly control the patrol of the cameras. As a result, the user does not need to spend a lot of time on manual settings, and the surveillance system will not miss the chances of recording important events.

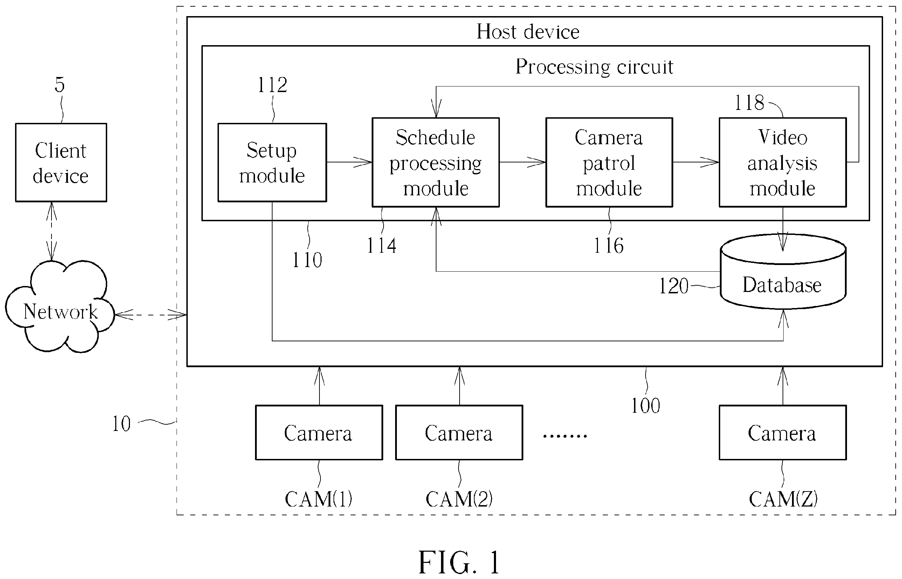

Fig. 1 is a diagram of a surveillance system 10 according to an embodiment of the present invention. The surveillance system 10 may be taken as an example of the surveillance system mentioned above, and cameras CAM(1), CAM(2), ..., and CAM(Z) of the surveillance system 10 may be taken as the plurality of cameras, in which the notation "Z" may be a positive integer that is greater than one. The surveillance system 10 may include a host device 100 configured to perform multi-camera automatic patrol control on the cameras CAM(1), CAM(2), ..., and CAM(Z), and the host device 100 may include a processing circuit 110 and a database 120, in which the processing circuit 110 may generate data in the database 120 and may update at least one portion (e.g. a portion or all) of the data in the database 120. The database 120 may be implemented with a set of one or more storage devices of the surveillance system 10, such as Hard Disk Drives (HDDs) and/or Solid State Drives (SSDs) within the surveillance system 10. The processing circuit 110 may be arranged to control operations of the surveillance system 10 according to the method, and may include a plurality of modules for controlling the operations, such as a setup module 112, a schedule processing module 114, a camera patrol module 116, and a video analysis module 118. The setup module 112 may set some parameters of the surveillance system 10 when needed. The schedule processing module 114 may perform schedule processing (e.g. determine and adjust one or more patrol schedule of one or more of the cameras CAM(1), CAM(2), ..., and CAM(Z)) according to the data in the database 120 to determine a scheduling plan, and the camera patrol module 116 may control the camera patrol of at least one portion (e.g. a portion or all) of the cameras CAM(1), CAM(2), ..., and CAM(Z)) according to the scheduling plan. The associated information of the scheduling plan may be transmitted to the video analysis module 118. The video analysis module 118 may perform video analysis on some images from the cameras CAM(1), CAM(2), ..., and CAM(Z). As the associated information of the scheduling plan may be transmitted to the video analysis module 118, the video analysis module 118 may perform the video analysis correctly and transmit analysis results to the schedule processing module 114 with aid of the associated information. As a result, the schedule processing module 114 may automatically determine and update the scheduling plan. For example, each of the modules may be implemented as a software module programmed to control operations of the surveillance system according to the method, but the present invention is not limited thereto. In some embodiments, the modules may be implemented as dedicated and customized hardware circuits configured to control operations of the surveillance system according to the method.

For better comprehension, a client device 5 that may connect to the host device 100 through at least one network (e.g. one or more networks, such as wired network(s) and/or wireless network(s)) is also illustrated in Fig. 1. Examples of the client device 5 may include, but are not limited to: a multifunctional mobile phone, a tablet computer, and a laptop computer. The user may use the client device 5 to log into the surveillance system 10 and may interact with a user interface (UI) of the host device 100 through a browser running on the client device 5. As a result, the user may apply some settings to the surveillance system 10 and/or view recorded images, recorded video clips, etc. For example, the host device 100 may be implemented with a Network Attached Storage (NAS) device, but the present invention is not limited thereto. In some examples, the host device 100 may be implemented with any of other types of storage devices.

According to some embodiments, the host device 100 (e.g. the processing circuit 110) may operate according to the method without the need of a lot of computation and specialized hardware, to prevent missing the chances of recording important events. For example, the host device 100 may be implemented with a NAS device such as that mentioned above, and the processing circuit 110 does not need to have high-performance computing ability.

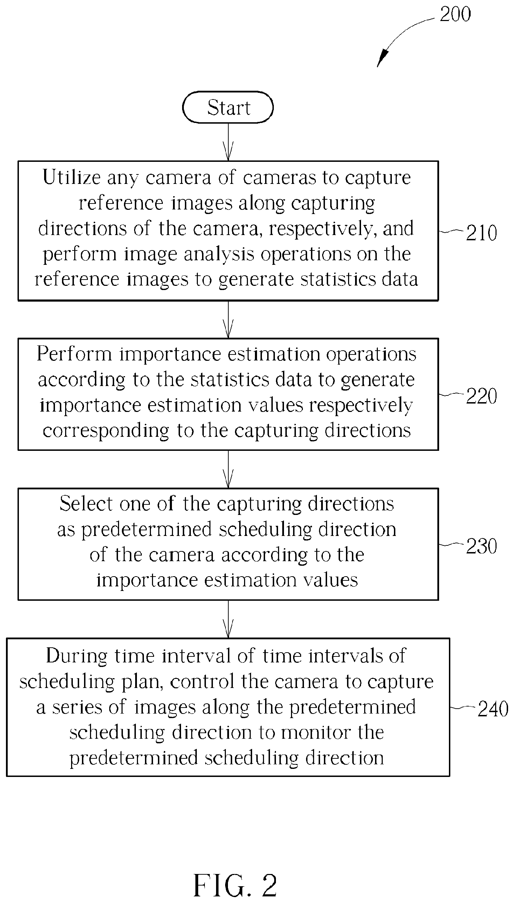

Fig. 2 is a flowchart of a method 200 for performing multi-camera automatic patrol control with aid of statistics data in a surveillance system according to an embodiment of the present invention. The method 200 may be taken as an example of the method mentioned above. The method 200 may be applied to the surveillance system 10, and may be applied to the host device 100 and the processing circuit 110 therein.

In Step 210, the processing circuit 110 may utilize any camera CAM(z) of the cameras {CAM(1), CAM(2), ..., CAM(Z)} to capture a plurality of reference images along a plurality of capturing directions of the camera CAM(z), respectively, and may perform image analysis operations on the plurality of reference images to generate statistics data, in which the index z may be an integer within the interval [1, Z], and at least one portion (e.g. a portion or all) of data within the statistics data is related to events that the surveillance system 10 detects through the camera CAM(z). For example, the statistics data may include a plurality of importance factors, and each importance factor of the plurality of importance factors may correspond to event concentration (e.g. a relative amount of events in a particular size of area or in a particular volume of space).

In Step 220, the processing circuit 110 may perform importance estimation operations according to the statistics data to generate a plurality of importance estimation values respectively corresponding to the plurality of capturing directions, in which the plurality of importance estimation values may indicate degrees of importance of the plurality of capturing directions, respectively.

In Step 230, the processing circuit 110 may select one of the plurality of capturing directions as a predetermined scheduling direction of the camera CAM(z) according to the plurality of importance estimation values.

In Step 240, during a time interval of a plurality of time intervals of a scheduling plan, the processing circuit 110 may control the camera CAM(z) to capture a series of images along the predetermined scheduling direction to monitor the predetermined scheduling direction.

As the camera CAM(z) may represent any of the cameras {CAM(1), CAM(2), ..., CAM(Z)}, the processing circuit 110 may perform similar operations with respect to the cameras {CAM(1), CAM(2), ..., CAM(Z)}, respectively. In addition, the processing circuit 110 may utilize at least one portion (e.g. a portion or all) of images within the series of images as subsequent reference images, for performing subsequent image analysis operations. As these images may be utilized as the subsequent reference images, the usage of these images are directed to multiple purposes, rather than being limited to a single purpose. Under control of the processing circuit 110, the surveillance system 10 may avoid unnecessary waste of time for any unneeded image capturing operation and may avoid unnecessary waste of storage space for any unneeded image storing operation, and the overall performance of the surveillance system 10 may be enhanced.

With regard to event detection, some implementation details may be described as follows. According to some embodiments, the plurality of reference images may include a set of reference images that the camera CAM(z) captures along a capturing direction of the plurality of capturing directions. In Step 210, the processing circuit 110 may perform foreground detection operations on the set of reference images according to a background picture corresponding to the capturing direction, to generate data corresponding to at least one event (e.g. one or more events) within the statistics data, in which the statistics data may include the data. The aforementioned at least one event may represent that at least one foreground object appears on the background picture, and the image analysis operations may include the foreground detection operations. In some embodiments, the background picture may correspond to a common background of the set of reference images. In Step 210, the processing circuit 110 may perform background detection operations on at least one portion (e.g. a portion or all) of reference images within the plurality of reference images to generate background pictures respectively corresponding to the plurality of capturing directions. The background pictures may include the background picture, and the image analysis operations may include the background detection operations.

With regard to the statistics data and the associated estimation and prediction, some implementation details may be described in one or more of the following embodiments.

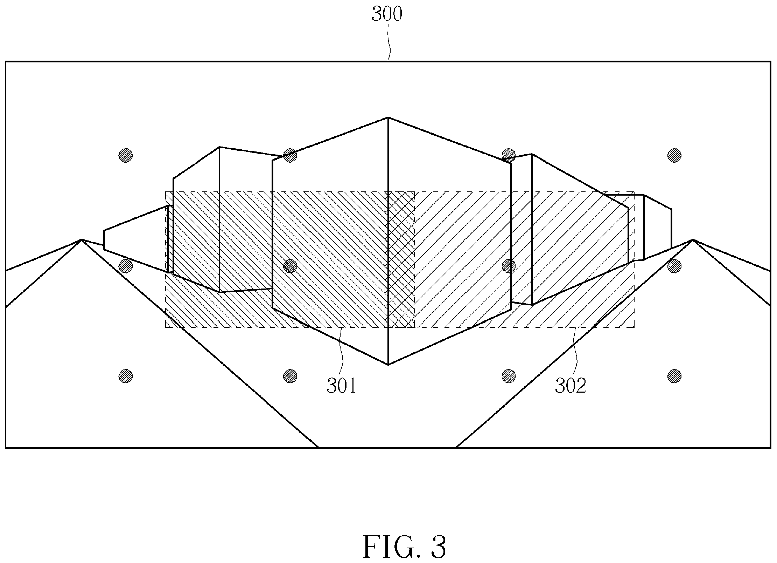

Fig. 3 illustrates some spots indicating candidate capturing directions of the camera CAM(z) controlled with the method 200 shown in Fig. 2 according to an embodiment of the present invention. The processing circuit 110 may control the camera CAM(z) to aim at any of multiple spots corresponding different capturing directions, such as twelve spots shown in Fig. 3, or any number of spots. For better comprehension, the twelve spots may correspond to twelve capturing directions of the camera CAM(z), respectively, and these capturing directions may be taken as examples of the plurality of capturing directions mentioned in Step 210. The processing circuit 110 may obtain twelve background pictures corresponding to these capturing directions, and may combine these background pictures to generate a global background picture 300. These background pictures may be taken as examples of the background pictures respectively corresponding to the plurality of capturing directions, and each of the partial images 301 and 302 may be taken as an example of one of the twelve background pictures. In some embodiments, the number of capturing directions (or the number of spots for the camera CAM(z) to aim at) may vary. As shown in Fig. 3, the partial images 301 and 302 may have an overlapped portion of monitoring regions, but the present invention is not limited thereto. In some embodiments, two background pictures corresponding to adjacent spots (e.g. any two adjacent spots within the twelve spots) may have no overlapped portion of monitoring regions.

According to this embodiment, in Step 210, the processing circuit 110 may perform the image analysis operations on the plurality of reference images, respectively, to generate a plurality of characteristic values respectively corresponding to the plurality of capturing directions such as the twelve capturing directions. The plurality of importance factors may include the plurality of characteristic values, and at least one characteristic value of the plurality of characteristic values may indicate concentration of at least one type (e.g. one or more types) of events that the surveillance system 10 detects through the camera CAM(z) along a capturing direction of the plurality of capturing directions, and the aforementioned at least one type of events may represent that at least one type (e.g. one or more types) of foreground objects appear on a background picture. Examples of the aforementioned at least one type of foreground objects may include, but are not limited to: vehicles (e.g. cars, motorcycles, etc.) and pedestrians. In addition, the processing circuit 110 may store parameter settings related to controlling the camera CAM(z) to aim at any of the patrol spots such as the twelve spots. For example, each of the patrol spots may be identified with a spot identification (ID) such as a spot ID number, and the associated parameter settings may include a set of one or more commands.

Table 1

| Spot ID | Command |
|---------|---------|
| 1 | Move Left, Move Top |
| 2 | Move Left, Move Top, Move Top |

Table 1 illustrates some examples of the spot ID and the set of one or more commands, but the present invention is not limited thereto. In some embodiments, the spot ID and the set of one or more commands may vary.

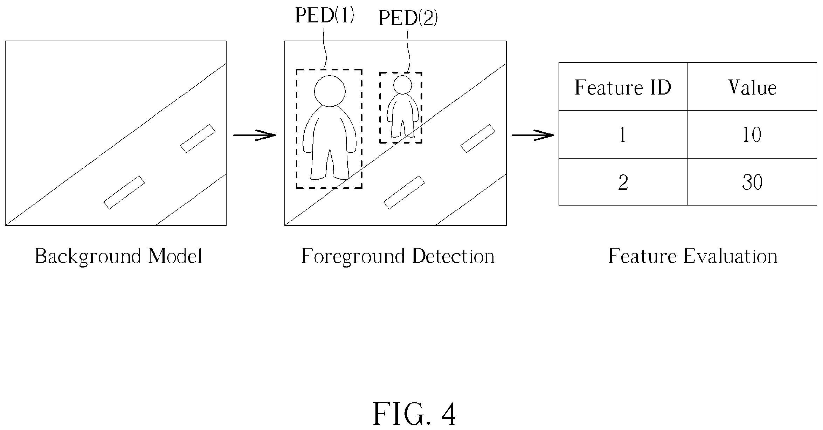

Fig. 4 illustrates an event statistics control scheme of the method 200 shown in Fig. 2 according to an embodiment of the present invention. In the beginning, the processing circuit 110 may control the camera CAM(z) to patrol through each of the patrol spots according to a default plan. The processing circuit 110 may control the camera CAM(z) to stay at each of the patrol spots for the same length of time period, and may perform video analysis for each of the patrol spots to obtain event statistics data of each of the patrol spots to generate the statistics data. As shown in Fig. 4, the processing circuit 110 may establish the background model to obtain the background picture of each patrol spot of the patrol spots, and may perform foreground detection to find out any moving object or any foreground object (e.g. an object that is different from the background picture), such as any pedestrian or any vehicle. For example, some pedestrians including the pedestrians PED(1) and PED(2) may be found. It should be understood that, the foreground object is not limited to a moving object. In some embodiments, any object that is worth noting should be regarded as the foreground object.

According to this embodiment, the aforementioned at least one characteristic value may include a set of characteristic values, and the aforementioned at least one type of events may include multiple types of events. The set of characteristic values may correspond to the types of events, respectively, and each of the types may be identified with a feature ID. For example, in the feature evaluation shown in Fig. 4, the first row of data (1, 10) may represent that there are ten pedestrian events in the event detection of pedestrians, and the second row of data (2, 30) may represent that there are thirty vehicle events in the event detection of vehicles, but the present invention is not limited thereto. In some embodiments, the set of characteristic values and the types of events may vary. For example, the characteristic values (e.g. values in the field "Value" of the feature evaluation shown in Fig. 4) may represent event concentration (e.g. a number of a type of events per unit time, or a score number of a type of events per unit time). In some embodiments, the number of types (or the number of feature ID) may vary.

Table 2

| Time | Spot ID | Feature 1 | Feature 2 | Feature 3 |
|------|---------|-----------|-----------|-----------|
| 00:00:10 | 1 | 30 | 10 | 30 |
| 00:00:10 | 2 | 50 | 12 | 30 |
| 00:00:20 | 3 | 10 | 2 | 6 |
| 00:00:30 | 1 | 15 | 5 | 9 |

Table 2 illustrates an example of an event table having a predetermined event data storage format with respect to time. For brevity, only a portion of records in the event table is illustrated. The time may be recorded in the format of "hh:mm:ss" (hour: minute : second), and each row of event data may be taken as an example of the spot ID and the set of characteristic values respectively corresponding to the types (e.g. the types respectively identified with the fields "Feature 1", "Feature 2", and "Feature 3"), but the present invention is not limited thereto. In some embodiments, the event data storage format may vary.

Table 3

| Time | Spot ID | Feature 1 | Feature 2 | Feature 3 |
|------|---------|-----------|-----------|-----------|
| 00:02:00 | 1 | 30 | 10 | 20 |
| 00:02:10 | 2 | 50 | 12 | 30 |
| 00:02:23 | 1 | 10 | 2 | 6 |
| 00:03:40 | 3 | 15 | 5 | 9 |

Table 3 illustrates another example of the event table having the predetermined event data storage format with respect to time. For brevity, only a portion of records in the event table is illustrated. In Step 220, the processing circuit 110 may perform a weighted average operation on the set of characteristic values to generate a weighted average value, and may utilize the weighted average value as an importance estimation value corresponding to the capturing direction, in which the plurality of importance estimation values includes the importance estimation value. For example, the types (e.g. the types respectively identified with the fields "Feature 1", "Feature 2", and "Feature 3") may represent pedestrian events, car events, and motorcycle events, respectively, and the characteristic values recorded in these fields in any of the rows may represent event concentration, respectively. The processing circuit 110 may calculate an average value of characteristic values corresponding to the same time period (e.g. the time period 00:02:00-00:02:30), corresponding to the same spot ID (e.g. Spot ID 1), and corresponding to the same feature (e.g. Feature 1) and utilize the average value as a resultant characteristic value, and the processing circuit 110 may perform an operation similar to this operation for any of the time periods, any of the spot IDs, and any of the features when needed. For the case that there is only one record corresponding to a certain spot ID in a time period (e.g. the second row of characteristic values (50, 12, 30)), the processing circuit 110 may utilize a characteristic value corresponding to the same time period (e.g. the time period 00:02:00-00:02:30), corresponding to the same spot ID (e.g. Spot ID 2), and corresponding to the same feature (e.g. Feature 1) as a resultant characteristic value. As a result, the processing circuit 110 may obtain a plurality of resultant characteristic values corresponding to different combinations of the time periods, the spot IDs, and the features, respectively. In addition, when determining the importance of any spot ID of the spot IDs for a specific time period of the time periods, the processing circuit 110 may perform a weighted average operation on resultant characteristic values respectively corresponding to the features and corresponding to this spot ID and the specific time period, in which predetermined weighting coefficients respectively corresponding to the features are applied to the features, respectively. As a result, the processing circuit 110 may obtain a plurality of weighted average values corresponding to different combinations of the time periods and the spot IDs, respectively. For example, the pedestrian events may correspond to a weighting coefficient higher than that of the car events and the motorcycle events. As a result, the importance estimation value corresponding to Spot ID 2 may be higher than that corresponding to Spot ID 1, and the processing circuit 110 may select Spot ID 2 as the spot for the camera CAM(z) to aim at during the time period 00:02:00-00:02:30 of a day in the scheduling plan. Table 4 illustrates an example of a patrol spot table for the camera CAM(z). For brevity, only a portion of records in the patrol spot table is illustrated. When selecting Spot ID 2 as the spot for the camera CAM(z) to aim at during the time period 00:02:00-00:02:30 mentioned above, the processing circuit 110 may record "2" in the blank field corresponding to the time period 00:02:00-00:02:30 (labeled "00:02:00" in the field "Time") in the patrol spot table.

Table 4

| Time | Spot ID |
|------|---------|
| 00:00:00 | 1 |
| 00:00:30 | 1 |
| 00:01:00 | 2 |
| 00:01:30 | 2 |
| 00:02:00 | |

According to some embodiments, the processing circuit 110 may perform the weighted average operation on the set of characteristic values to generate the weighted average value according to the following equations:

$$F_{s,n} = \frac{1}{C_s} \sum_{c=1}^{C_s} f_{s,n,c}$$
……………………………………(1)

$$V(s) = \sum_{n=1}^{N} w_n * F_{s,n}$$
……………………………(2)

In Equation (1), the notation "$f_{s,n,c}$" represents the characteristic value of feature n (e.g. feature ID) with regard to spot s (e.g. spot ID) in the $c^{th}$ set of characteristic values, the notation "$C_s$" represents the number of one or more sets of characteristic values with regard to spot s (e.g. spot ID), and the notation "$F_{s,n}$" represents an average value of the characteristic values of feature n (e.g. feature ID) with regard to spot s (e.g. spot ID) in the one or more sets of characteristic values. Please note that Equation (1) may be simplified to become "$F_{s,n} = f_{s,n,c}$" when the number $C_s$ of the one or more sets of characteristic values applied to Equation (1) during the patrol spot/direction prediction of the camera CAM(z) for the time interval mentioned in Step 240 is equal to one (i.e. $C_s = 1$), and the average value $F_{s,n}$ in Equation (1) may be equal to the characteristic value $f_{s,n,c}$ in this set of characteristic values of this situation. In addition, in Equation (2), the notation "$w_n$" represents a weighting coefficient of feature n (e.g. feature ID), the notation "N" represents the number of features (e.g. the number of event types), and the notation "V(s)" represents the weighted average value. As a result, the processing circuit 110 may utilize the weighted average value V(s) as the importance estimation value corresponding to the capturing direction associated to spot s (e.g. spot ID). In Step 230, the processing circuit 110 may determine the predetermined scheduling direction of the camera CAM(z) according to the following equation:

$$S_{schedule} = argmax(V(s))$$
…………………(3)

In Equation (3), the notation "argmax( )" represents a function of finding the patrol spot (or direction) corresponding to maximum value of V(s) among other patrol spots (or directions), and the notation "$S_{schedule}$" represents the selected patrol spot corresponding to the predetermined scheduling direction. As finding the patrol spot corresponding to maximum value of V(s) among other patrol spots may be regarded as finding the capturing direction corresponding to the maximum value of V(s) among other directions within the plurality of capturing directions, based on the function of Equation (3), the processing circuit 110 may determine the predetermined scheduling direction mentioned in Step 230.

According to some embodiments, when there are multiple capturing directions corresponding to the maximum value of V(s), the processing circuit 110 may randomly select one of these capturing directions as the predetermined scheduling direction. According to some embodiments, when there is no statistics data available for patrol spot prediction of the time interval mentioned in Step 240, the processing circuit 110 may randomly select one of the plurality of capturing directions as the predetermined scheduling direction.

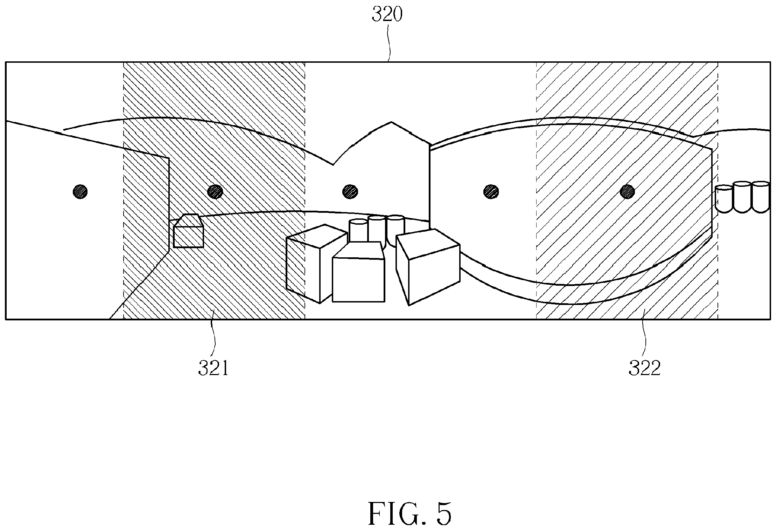

Fig. 5 illustrates some spots indicating candidate capturing directions of the camera CAM(z) controlled with the method 200 shown in Fig. 2 according to another embodiment of the present invention. In this embodiment, the global background picture 300 shown in Fig. 3 may be replaced with the global background picture 320, and the number of patrol spots (or the number of capturing directions) may become five. Each of the partial images 321 and 322 may be taken as an example of one of the background pictures. In addition, the arrangement of the patrol spots may be changed, and the patrol spots may be on a horizontal line passing through the global background picture 320. For brevity, similar descriptions for this embodiment are not repeated in detail here.

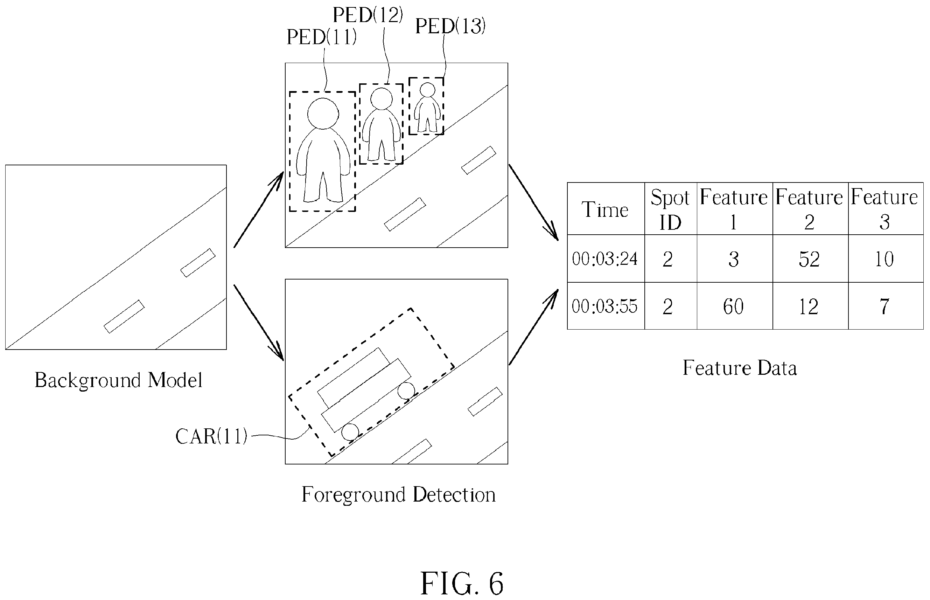

Fig. 6 illustrates an event statistics control scheme of the method 200 shown in Fig. 2 according to another embodiment of the present invention. In this embodiment, foreground detection corresponding to different types of events (e.g. pedestrian events and vehicle events) are illustrated. For example, regarding the feature data, some pedestrians including the pedestrians PED(11), PED(12) and PED(13) may be found at the time point "00:03:24", and some vehicles including the car CAR(11) may be found at the time point "00:03:55". For brevity, similar descriptions for this embodiment are not repeated in detail here.

According to some embodiments, as the camera CAM(z) may represent any of the cameras {CAM(1), CAM(2), ..., CAM(Z)}, the processing circuit 110 may perform similar operations with respect to the cameras {CAM(1), CAM(2), ..., CAM(Z)}, respectively. For example, when the camera CAM(z) represents a first camera within the cameras{CAM(1), CAM(2), ..., CAM(Z)}, the plurality of capturing directions may represent a plurality of first capturing directions of the first camera, the plurality of importance estimation values may represent a plurality of first importance estimation values respectively corresponding to the plurality of first capturing directions, and the predetermined scheduling direction may represent a first predetermined scheduling direction. In another example, when the camera CAM(z) represents a second camera within the cameras {CAM(1), CAM(2), ..., CAM(Z)}, the plurality of capturing directions may represent a plurality of second capturing directions of the second camera, the plurality of importance estimation values may represent a plurality of second importance estimation values respectively corresponding to the plurality of second capturing directions, and the predetermined scheduling direction may represent a second predetermined scheduling direction. In addition, the processing circuit 110 may perform estimation and prediction according to the data in the database 120 that are related to two or more cameras within the cameras {CAM(1), CAM(2), ..., CAM(Z)}, to perform multi-camera automatic patrol control. For example, with regard to a combination of utilizing any first capturing direction of the plurality of first capturing directions and utilizing any second capturing direction of the plurality of second capturing directions, the processing circuit 110 may calculate a summation of a corresponding first importance estimation value of the plurality of first importance estimation values and a corresponding second importance estimation value of the plurality of second importance estimation values as a total estimation value of the combination. According to a plurality of total estimation values of various combinations of utilizing the plurality of first capturing directions and utilizing the plurality of second capturing directions, the processing circuit 110 may select one of the combinations to determine the first predetermined scheduling direction and the second predetermined scheduling direction, in which the plurality of total estimation values includes the total estimation value, and a first capturing direction and a second capturing direction within the selected combination are selected as the first predetermined scheduling direction and the second predetermined scheduling direction, respectively.

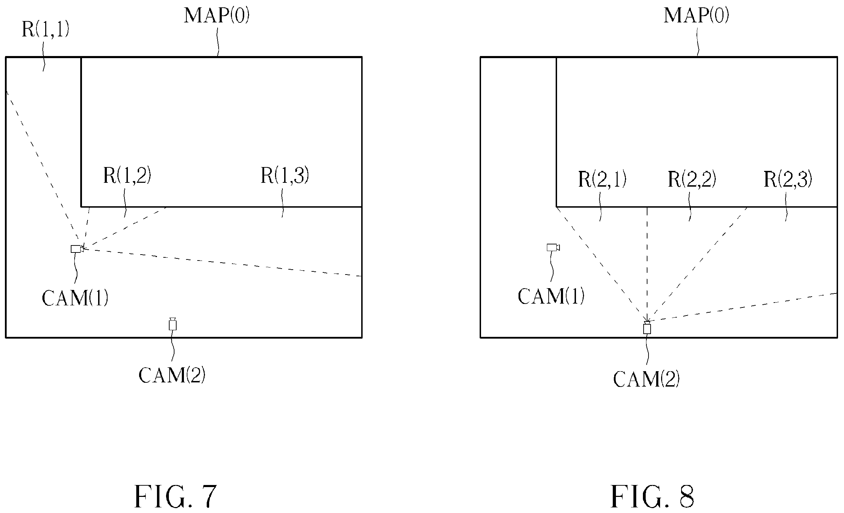

For better comprehension, in the embodiments shown in Fig. 7-10, the camera CAM(1) may be taken as an example of the first camera, and the camera CAM(2) may be taken as an example of the second camera.

Fig. 7 illustrates some candidate monitoring regions {R(1, 1), R(1, 2), R(1, 3)} of the camera CAM(1) controlled with the method 200 shown in Fig. 2 according to an embodiment of the present invention, and Fig. 8 illustrates some candidate monitoring regions {R(2, 1), R(2, 2), R(2, 3)} of the camera CAM(2) controlled with the method 200 shown in Fig. 2 according to this embodiment. In the electronic map MAP(0), the rectangular area around the upper right corner may represent an obstacle such as another room (e.g. a meeting room or a laboratory room) that the surveillance system 10 cannot monitor through the cameras CAM(1) and CAM(2). The processing circuit 110 may determine a space model such as that defined with the electronic map MAP(0), determine the maximum monitoring area of the camera CAM(1) (e.g. the union of the monitoring regions {R(1, 1), R(1, 2), R(1, 3)}), and determine the maximum monitoring area of the camera CAM(2) (e.g. the union of the monitoring regions {R(2, 1), R(2, 2), R(2, 3)}). In addition, the processing circuit 110 may determine the patrol spots respectively corresponding to the first capturing directions, such as the patrol spots of the camera CAM(1), and may determine the patrol spots respectively corresponding to the second capturing directions, such as the patrol spots of the camera CAM(2). For example, the processing circuit 110 may utilize the camera CAM(1) to monitor the monitoring regions {R(1, 1), R(1, 2), R(1, 3)} along the first capturing directions, respectively, and may utilize the camera CAM(2) to monitor the monitoring regions {R(2, 1), R(2, 2), R(2, 3)} along the second capturing directions, respectively.

According to some embodiments, there may be one or more other cameras of the surveillance system 10 (e.g. N > 2), and the surveillance system 10 may monitor the other room through the one or more other cameras therein.

When the one or more other cameras include multiple cameras (e.g. N > 3), the processing circuit 110 may perform estimation and prediction according to the data in the database 120 that are related to these cameras, to perform multi-camera automatic patrol control.

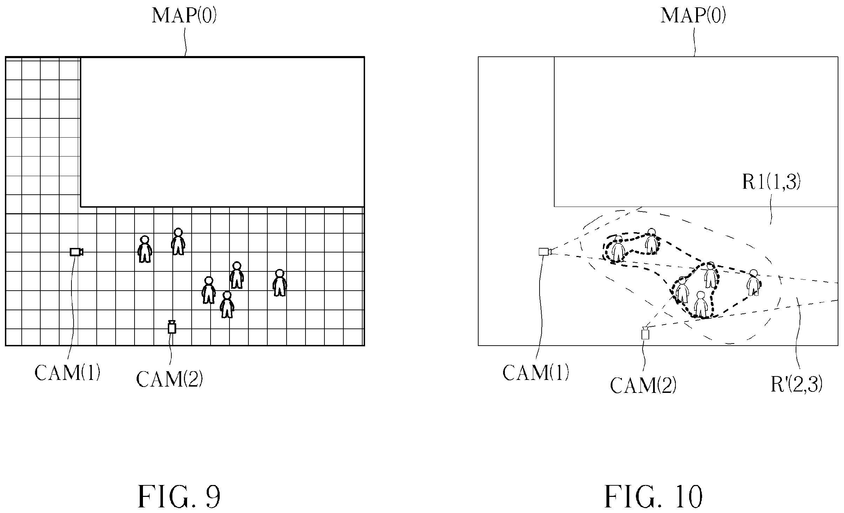

Fig. 9 illustrates some spatial sampling points of an importance calculation model of the method 200 shown in Fig. 2 according to an embodiment of the present invention. For better comprehension, each of the intersections of the grid lines shown in Fig. 9 may be regarded as a spatial sampling point $P_i$ on the electronic map MAP(0), and the spatial sampling point index i of the spatial sampling point $P_i$ may vary to represent a plurality of spatial sampling points $\{P_i\}$ on the electronic map MAP(0), respectively. The processing circuit 110 may perform the image analysis operations on the plurality of reference images to generate one or more sets of coordinate values on the electronic map MAP(0), respectively, and each set of the one or more sets of coordinate values may be the coordinate values of one of the plurality of spatial sampling points $\{P_i\}$. The electronic map MAP(0) may correspond to the space monitored by the surveillance system 10, and each set of coordinate values within the one or more sets of coordinate values may indicate an occurrence location of an event (e.g. a pedestrian event) that the surveillance system 10 detects through the camera CAM(z) along a capturing direction $Direct_k$ of the plurality of capturing directions (in which the notation "k" represents the direction index of the capturing direction $Direct_k$). For example, each set of the sets of coordinate values may indicate the occurrence location of an event (e.g. a pedestrian event), such as a set of coordinate values of a foreground object $FO_j$ that the surveillance system 10 detects through the camera CAM(z) along the capturing direction $Direct_k$. The object index j of the foreground object $FO_j$ may vary. When the surveillance system 10 detects more than one foreground object through the cameras CAM(1) and CAM(2), the object index j of the foreground object $FO_j$ may vary to represent multiple foreground objects (e.g. $\{FO_{ij}\}$) that the surveillance system 10 detects through at least one of the cameras CAM(1) and CAM(2), respectively. When the surveillance system 10 detects two foreground objects through the cameras CAM(1) and CAM(2), respectively, and the two foreground objects are close to each other on the electronic map MAP(0) (e.g. the distance between the two foreground objects is less than a predetermined threshold such as the distance between two adjacent grid lines shown in Fig. 9), the processing circuit 110 may merge the two foreground objects into the same detected object located at the midpoint between the locations of the two foreground objects on the electronic map MAP(0). As a result, the processing circuit 110 may locate a set of one or more foreground objects $\{FO_j\}$ in the space model defined with the electronic map MAP(0).

Based on the importance calculation model, the processing circuit 110 may calculate importance factors $\{V_i\}$ of the plurality of spatial sampling points $\{P_i\}$ on the electronic map MAP(0) (e.g. the intersections of the grid lines shown in Fig. 9) according to the one or more sets of coordinate values, respectively. For example, the processing circuit 110 may calculate an importance factor $V_i$ of the spatial sampling point $P_i$ according to the following equation:

$$V_i = \max_{1 \leq j \leq m} \left( \frac{1}{\sqrt{2\pi}} exp \left( -\frac{d_{ij}^2}{2} \right) \right)$$

$$\dots\dots\dots\dots(4)$$

In Equation (4), the notation "$d_{ij}$" represents the distance between the spatial sampling point $P_i$ and the foreground object $FO_j$, the notation "exp( )" represents the exponential function, the notation "m" represents the number of foreground objects $\{FO_{ij}\}$ (e.g. the number m is a positive integer), the object index j may be a positive integer within the interval [1, m], and the notation "max( )" represents a function of finding a maximum. The number m of the one or more foreground objects $\{FO_{ij}\}$ may be regarded as the number of one or more events. According to this embodiment, the importance calculation model may be expressed with Equation (4). These importance factors $\{V_i\}$ that the processing circuit 110 calculates based on the importance calculation model may include the plurality of importance factors mentioned in the embodiment shown Fig. 2. For example, the processing circuit 110 may utilize at least one portion (e.g. a portion or all) of these importance factors $\{V_i\}$ as the plurality of importance factors in Step 210.

Please note that, the one or more sets of coordinate values may indicate occurrence locations of one or more events that the surveillance system 10 detects through the camera CAM(z) along the capturing direction $Direct_k$. With regard to the spatial sampling point $P_i$ of the plurality of spatial sampling points $\{P_i\}$, the importance calculation model may include at least one distance parameter (e.g. a set of one or more distances $\{d_{ij}\}$ in Equation(4), such as the distances $\{\{di_j | j = 1\}, ..., \{di_j | j = m\}\}$). The aforementioned at least one distance parameter may include a closest distance parameter (e.g. the minimum of the set of one or more distances $\{d_{ij}\}$), and the closest distance parameter may represent the distance between the occurrence location of the closest event within the one or more events and the spatial sampling point $P_i$. Based on the importance calculation model, the importance factor $V_i$ of the spatial sampling point $P_i$ and the

closest distance parameter (e.g. the minimum of the set of one or more distances $\{d_{ij}\}$) have a negative correlation. For example, the one or more events may include a plurality of events, and the aforementioned at least one distance parameter may include a plurality of distance parameters (e.g. the distances $\{\{d_{ij} \mid j = 1\}, ..., \{d_{ij} \mid j = m\}\}$), in which the plurality of distance parameters may represent the distances between the occurrence locations of the plurality of events and the spatial sampling point $P_i$, respectively, and the closest distance parameter is the minimum of the plurality of distance parameters.

In addition, the processing circuit 110 may select a set of spatial sampling points from the plurality of spatial sampling points $\{P_i\}$, such as the set of spatial sampling points $\{P_i \mid P_i \in Direct_k\}$ that the surveillance system 10 is capable of monitoring through the camera CAM(z) along the capturing direction $Direct_k$ of the camera CAM(z), and may utilize importance factors $\{V_i \mid P_i \in Direct_k\}$ of the set of spatial sampling points $\{P_i \mid P_i \in Direct_k\}$ as the plurality of importance factors, in which the set of spatial sampling points $\{P_i \mid P_i \in Direct_k\}$ may fall within a predetermined monitoring region of the camera CAM(z) on the electronic map MAP(0) when the camera CAM(z) captures along the capturing direction $Direct_k$. For example, the predetermined monitoring region of the camera CAM(1) may be the monitoring region R(1, 1) when the camera CAM(1) captures along the capturing direction Direct($\alpha$), or may be the monitoring region R(1, 2) when the camera CAM(1) captures along the capturing direction Direct($\beta$), or may be the monitoring region R(1, 3) when the camera CAM(1) captures along the capturing direction Direct($\gamma$). The predetermined monitoring region of the camera CAM(2) may be the monitoring region R(2, 1) when the camera CAM(2) captures along the capturing direction Direct(1), or may be the monitoring region R(2, 2) when the camera CAM(2) captures along the capturing direction Direct(2), or may be the monitoring region R(2, 3) when the camera CAM(2) captures along the capturing direction Direct(3).

Additionally, the processing circuit 110 may calculate a summation of the importance factors $\{V_i \mid P_i \in Direct_k\}$ of the set of spatial sampling points $\{P_i \mid P_i \in Direct_k\}$, and utilize the summation as an importance estimation value $Eval_k$ corresponding to the capturing direction $Direct_k$, in which the plurality of importance estimation values mentioned in Step 220 may include the importance estimation value $Eval_k$. For example, in Step 220, the processing circuit 110 may calculate the importance estimation value $Eval_k$ according to the following equation:

$$Eval_k = \sum_{P_i \in Direct_k} V_i$$

$$\dots\dots\dots\dots\dots\dots\dots\dots\dots(5)$$

As a result, the processing circuit 110 may obtain the importance estimation value $Eval_k(1)$ of the camera CAM(1) with regard to the capturing direction $Direct_k(1)$ of the camera CAM(1) (e.g. the $k^{th}$ capturing direction within the capturing directions {Direct($\alpha$), Direct($\beta$), Direct($\gamma$)}), the importance estimation value $Eval_k(2)$ of the camera CAM(2) with regard to the capturing direction $Direct_k(2)$ of the camera CAM(2) (e.g. the $k^{th}$ capturing direction within the capturing directions {Direct(1), Direct(2), Direct(3)}), etc. In this embodiment, the capturing directions {Direct($\alpha$), Direct(($\beta$), Direct($\gamma$)} may be taken as examples of the first capturing directions of the first camera (e.g. the camera CAM(1)) and the capturing directions {Direct(1), Direct(2), Direct(3)} may be taken as examples of the second capturing directions of the second camera (e.g. the camera CAM(2)), but the present invention is not limited thereto. According to some embodiments, the number of the first capturing directions and the number of the second capturing directions may vary.

Table 5

| CAM(2) \ CAM(1) | Direct(1) | Direct(2) | Direct(3) |
|---|---|---|---|
| Direct(α) | 1.5 | 1.7 | 4.2 |
| Direct(β) | 1.5 | 1.9 | 4.3 |
| Direct(γ) | 2.3 | 2.4 | 5.1 |

Table 5 illustrates some examples of the plurality of total estimation values of the combinations of utilizing the plurality of first capturing directions and utilizing the plurality of second capturing directions. For example, the total estimation value of the combination of utilizing the capturing direction Direct($\alpha$) of the camera CAM(1) and utilizing the capturing direction Direct(1) of the camera CAM(2) may be 1.5, the total estimation value of the combination of utilizing the capturing direction Direct($\alpha$) of the camera CAM(1) and utilizing the capturing direction Direct(2) of the camera CAM(2) may be 1.7, ..., and the total estimation value of the combination of utilizing the capturing direction Direct($\gamma$) of the camera CAM(1) and utilizing the capturing direction Direct(3) of the camera CAM(2) may be 5.1. As the total estimation value of 5.1 is the maximum within the plurality of total estimation values, the processing circuit 110 may select the combination of utilizing the capturing direction Direct($\gamma$) of the camera CAM(1) and utilizing the capturing direction Direct(3) of the camera CAM(2) as the selected combination.

For better comprehension, some pedestrians are illustrated as examples of the plurality of foreground objects in Fig. 9, but the present invention is not limited thereto. According to some embodiments, the space monitored by the surveillance system 10 may be outdoor space, in which examples of the one or more events detected by the surveillance system 10 may include pedestrian events, vehicle events, etc. and examples of the one or more foreground objects may include pedestrians, vehicles, etc.

Fig. 10 illustrates some monitoring regions regarding the selected combination according to an embodiment of the present invention. For better comprehension, some contours surrounding the events (e.g. pedestrian events) are illustrated to indicate the event concentration thereof (e.g. probability distribution of the events), but the present invention is not limited thereto. In addition, the capturing direction Direct($\gamma$) of the first capturing directions and the capturing direction Direct(3) of the second capturing directions within the selected combination are selected as the first predetermined scheduling direction and the second predetermined scheduling direction, respectively. According to this embodiment, when calculating the summation of the corresponding first importance estimation value (e.g. the importance estimation value $Eval_k(1)$ of the camera CAM(1)) and the corresponding second importance estimation value (e.g. the importance estimation value $Eval_k(2)$ of the camera CAM(2)) as the total estimation value of the combination, the processing circuit 110 may prevent repeatedly utilizing statistics data of any overlapping region of a corresponding monitoring region of the first camera and a corresponding monitoring region of the second camera, such as the overlapping region of the monitoring region R(1, 3) of the camera CAM(1) and the monitoring region R(2, 3) of the camera CAM(2). The processing circuit 110 may determine the monitoring region R'(2, 3) by subtracting the overlapping region from the monitoring region R(2, 3). For brevity, similar descriptions for this embodiment are not repeated in detail here.

As shown in the above embodiments, examples of the plurality of importance factors may include, but are not limited to: the plurality of characteristic values (e.g. the characteristic value $f_{s,n,c}$ in Equation (1) (if $C_s = 1$) such as any of the data {50, 12, 30} in Table 3, or the average value $F_{s,n}$ (if $C_s > 1$) such as any of the average values {20, 6, 13} of the data{{30, 10, 20}, {10, 2, 6}} in Table 3), the importance factor $V_i$ of the spatial sampling point $P_i$ in the importance calculation model, and a linear combination of at least one portion (e.g. a portion or all) of the importance factors {$V_i$} of the plurality of spatial sampling points {$P_i$}. In some embodiments, the linear combination may be the summation of the aforementioned at least one portion of the importance factors {$V_i$}.

For better comprehension, the electronic map MAP(0) may be illustrated as shown in some of the above embodiments, but the present invention is not limited thereto. According to some embodiments, the electronic map MAP(0) may vary. For example, the electronic map MAP(0) may be changed to have any of various contents and any of vary styles.

According to some embodiments, during a previous time interval of the time interval mentioned in Step 240, the processing circuit 110 may control the camera CAM(z) to perform capturing operations according to a first predetermined quality parameter. During the time interval mentioned in Step 240, the processing circuit 110 may control the camera CAM(z) to perform capturing operations according to a second predetermined quality parameter. The image quality corresponding to the second predetermined quality parameter is higher than the image quality corresponding to the first predetermined quality parameter. For example, the first and the second predetermined quality parameters may represent resolutions, in which the former is lower than the latter. In another example, the first and the second predetermined quality parameters may represent data rates, in which the former is lower than the latter. During a later time interval (e.g. the next time interval) of this time interval, the processing circuit 110 may control the camera CAM(z) to perform capturing operations according to the first predetermined quality parameter. As the processing circuit 110 may perform estimation and prediction according to the data in the database 120 to determine the predetermined scheduling direction (rather than any of other capturing directions of the camera CAM(z)) for patrol control of the camera CAM(z) in the time interval mentioned in Step 240, the series of images captured along the predetermined scheduling direction in this time interval may correspond to the highest probability of recording event details (e.g. face images of suspects) of important events in this time interval. Thus, under control of the processing circuit 110, the surveillance system 10 will not miss the chances of recording the event details in this time interval, and may save the storage space of the set of one or more storage devices in each of the previous time interval and the later time interval.

**Claims**

1. A method for performing multi-camera automatic patrol control with aid of statistics data in a surveillance system (10), the method being applied to the surveillance system (10), the surveillance system (10) comprising a plurality of cameras, the method **characterized by**:

   utilizing any camera of the plurality of cameras to capture a plurality of reference images along a plurality of capturing directions of the camera, respectively, and performing image analysis operations on the plurality of reference images to generate statistics data, wherein at least one portion of data within the statistics data is related to events that the surveillance system (10) detects through the camera;
   performing importance estimation operations according to the statistics data to generate a plurality of importance estimation values respectively corresponding to the plurality of capturing directions, wherein the plurality of importance estimation values indicates degrees of importance of the plurality of capturing directions, respectively;
   selecting one of the plurality of capturing directions as a predetermined scheduling direction of the camera according to the plurality of importance estimation values; and
   during a time interval of a plurality of time intervals of a scheduling plan, controlling the camera to capture a series of images along the predetermined scheduling direction to monitor the predetermined scheduling direction.

2. An apparatus for performing multi-camera automatic patrol control with aid of statistics data in a surveillance system (10), the apparatus being applied to the surveillance system (10), the surveillance system (10) comprising a plurality of cameras, the apparatus **characterized by**:

   a processing circuit (110), arranged to control operations of the surveillance system (10), wherein controlling the operations of the surveillance system (10) comprises:

   utilizing any camera of the plurality of cameras to capture a plurality of reference images along a plurality of capturing directions of the camera, respectively, and performing image analysis operations on the plurality of reference images to generate statistics data, wherein at least one portion of data within the statistics data is related to events that the surveillance system (10) detects through the camera;
   performing importance estimation operations according to the statistics data to generate a plurality of importance estimation values respectively corresponding to the plurality of capturing directions, wherein the plurality of importance estimation values indicates degrees of importance of the plurality of capturing directions, respectively;
   selecting one of the plurality of capturing directions as a predetermined scheduling direction of the camera according to the plurality of importance estimation values; and
   during a time interval of a plurality of time intervals of a scheduling plan, controlling the camera to capture a series of images along the predetermined scheduling direction to monitor the predetermined scheduling direction.

3. The method of claim 1 or the apparatus of claim 2, **characterized in that** the statistics data comprise a plurality of importance factors, and each importance factor of the plurality of importance factors corresponds to event concentration.

4. The method of claim 2, **characterized in that** the step of performing the image analysis operations on the plurality of reference images to generate the statistics data further comprises:

   performing the image analysis operations on the plurality of reference images, respectively, to generate a plurality of characteristic values respectively corresponding to the plurality of capturing directions, wherein the plurality of importance factors comprises the plurality of characteristic values, and at least one characteristic value of the plurality of characteristic values indicates concentration of an event that the surveillance system (10) detects through the camera along a capturing direction of the plurality of capturing directions.

5. The method of claim 3, **characterized in that** the at least one characteristic value comprises a set of characteristic values, and the at least one type of events comprises multiple types of events; and the step of performing the importance estimation operations according to the statistics data to generate the plurality of importance estimation values respectively corresponding to the plurality of capturing directions further comprises:

performing a weighted average operation on the set of characteristic values to generate a weighted average value, and utilizing the weighted average value as an importance estimation value corresponding to the capturing direction, wherein the plurality of importance estimation values comprises the importance estimation value.

6. The method of claim 2, **characterized in that** the step of performing the image analysis operations on the plurality of reference images to generate the statistics data further comprises:

performing the image analysis operations on the plurality of reference images to generate one or more sets of coordinate values on an electronic map, respectively, wherein the electronic map corresponds to space monitored by the surveillance system (10), and each set of the one or more sets of coordinate values indicates an occurrence location of an event that the surveillance system (10) detects through the camera along a capturing direction of the plurality of capturing directions;
based on an importance calculation model, calculating importance factors of a plurality of spatial sampling points on the electronic map according to the one or more sets of coordinate values, respectively, wherein the importance factors of the plurality of spatial sampling points comprises the plurality of importance factors; and
selecting a set of spatial sampling points from the plurality of spatial sampling points, and utilizing importance factors of the set of spatial sampling points as the plurality of importance factors, wherein the set of spatial sampling points fall within a predetermined monitoring region of the camera on the electronic map when the camera captures along the capturing direction.

7. The method of claim 4 or 6, **characterized in that** the image analysis operations comprise foreground detection operations, and the event represents that a foreground object appears on a background picture.

8. The method of claim 6, **characterized in that** the one or more sets of coordinate values indicate occurrence locations of one or more events that the surveillance system (10) detects through the camera along the capturing direction; with regard to a spatial sampling point of the plurality of spatial sampling points, the importance calculation model comprises at least one distance parameter, wherein the at least one distance parameter comprises a closest distance parameter, and the closest distance parameter represents a distance between an occurrence location of a closest event within the one or more events and the spatial sampling point; and based on the importance calculation model, an importance factor of the spatial sampling point and the closest distance parameter have a negative correlation.

9. The method of claim 8, **characterized in that** the one or more events comprise a plurality of events, and the at least one distance parameter comprises a plurality of distance parameters, wherein the plurality of distance parameters represents distances between occurrence locations of the plurality of events and the spatial sampling point, respectively; and the closest distance parameter is a minimum of the plurality of distance parameters.

10. The method of claim 6, **characterized in that** the step of performing the importance estimation operations according to the statistics data to generate the plurality of importance estimation values respectively corresponding to the plurality of capturing directions further comprises:

calculating a summation of the importance factors of the set of spatial sampling points, and utilizing the summation as an importance estimation value corresponding to the capturing direction, wherein the plurality of importance estimation values comprises the importance estimation value.

11. The method of claim 1, **characterized in that** when the camera represents a first camera within the plurality of cameras, the plurality of capturing directions represents a plurality of first capturing directions of the first camera, the plurality of importance estimation values represents a plurality of first importance estimation values respectively corresponding to the plurality of first capturing directions, and the predetermined scheduling direction represents a first predetermined scheduling direction; when the camera represents a second camera within the plurality of cameras, the plurality of capturing directions represents a plurality of second capturing directions of the second camera, the plurality of importance estimation values represents a plurality of second importance estimation values respectively corresponding to the plurality of second capturing directions, and the predetermined scheduling direction represents a second predetermined scheduling direction; and the method further comprises:

with regard to a combination of utilizing any first capturing direction of the plurality of first capturing directions and utilizing any second capturing direction of the plurality of second capturing directions, calculating a summation of a corresponding first importance estimation value of the plurality of first importance estimation values and a corresponding second importance estimation value of the plurality of second importance estimation values as a total estimation value of the combination; and

according to a plurality of total estimation values of various combinations of utilizing the plurality of first capturing directions and utilizing the plurality of second capturing directions, selecting one of the combinations to determine the first predetermined scheduling direction and the second predetermined scheduling direction, wherein the plurality of total estimation values comprises the total estimation value, and a first capturing direction and a second capturing direction within the selected combination are selected as the first predetermined scheduling direction and the second predetermined scheduling direction, respectively.

12. The method of claim 11, **characterized in that** the step of calculating the summation of the corresponding first importance estimation value and the corresponding second importance estimation value as the total estimation value of the combination further comprises:

when calculating the summation, preventing repeatedly utilizing statistics data of any overlapping region of a corresponding monitoring region of the first camera and a corresponding monitoring region of the second camera.

13. The method of claim 1, further comprising:

during a previous time interval of the time interval, controlling the camera to perform capturing operations according to a first predetermined quality parameter; and

during the time interval, controlling the camera to perform capturing operations according to a second predetermined quality parameter, wherein image quality corresponding to the second predetermined quality parameter is higher than image quality corresponding to the first predetermined quality parameter.

14. The method of claim 1, **characterized in that** the plurality of reference images comprises a set of reference images that the camera captures along a capturing direction of the plurality of capturing directions; and the step of performing the image analysis operations on the plurality of reference images to generate the statistics data further comprises:

performing foreground detection operations on the set of reference images according to a background picture corresponding to the capturing direction, to generate data corresponding to at least one event within the statistics data, wherein the at least one event represents that at least one foreground object appears on the background picture, and the image analysis operations comprise the foreground detection operations.

15. The method of claim 14, **characterized in that** the background picture corresponds to a common background of the set of reference images; and the step of performing the image analysis operations on the plurality of reference images further comprises:

performing background detection operations on at least one portion of reference images within the plurality of reference images to generate background pictures respectively corresponding to the plurality of capturing directions, wherein the background pictures comprise the background picture, and the image analysis operations comprise the background detection operations.

FIG. 1

200

Start

Utilize any camera of cameras to capture reference images along capturing directions of the camera, respectively, and perform image analysis operations on the reference images to generate statistics data —210

Perform importance estimation operations according to the statistics data to generate importance estimation values respectively corresponding to the capturing directions —220

Select one of the capturing directions as predetermined scheduling direction of the camera according to the importance estimation values —230

During time interval of time intervals of scheduling plan, control the camera to capture a series of images along the predetermined scheduling direction to monitor the predetermined scheduling direction —240

FIG. 2

FIG. 3

PED(1)    PED(2)

| Feature ID | Value |
|------------|-------|
| 1 | 10 |
| 2 | 30 |

Background Model          Foreground Detection          Feature Evaluation

FIG. 4

FIG. 5

PED(11) PED(12) PED(13)

Background Model

CAR(11)

Foreground Detection

| Time | Spot ID | Feature 1 | Feature 2 | Feature 3 |
|------|---------|-----------|-----------|-----------|
| 00:03:24 | 2 | 3 | 52 | 10 |
| 00:03:55 | 2 | 60 | 12 | 7 |

Feature Data

FIG. 6

EP 3 432 575 A1

FIG. 8

FIG. 7

FIG. 10

FIG. 9

Europäisches
Patentamt

European
Patent Office

Office européen
des brevets

# EUROPEAN SEARCH REPORT

Application Number

EP 17 20 4266

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 024 227 A1 (CANON KK [JP]) 25 May 2016 (2016-05-25) * abstract * * figures 8,10-15 * * paragraphs [0002], [0073] - [0081], [0090] - [0100] * * claim 1 * | 1-12 | INV. H04N7/18 G06K9/00 G06K9/62 G06T7/292 |
| A | US 2010/208064 A1 (LIU LIPIN [US] ET AL) 19 August 2010 (2010-08-19) * abstract * * figures 4,5 * * paragraphs [0038] - [0059] * | 1-12 | |
| A | WO 2011/002775 A1 (BOSCH SECURITY SYSTEMS INC [US]; SABLAK SEZAI [US]) 6 January 2011 (2011-01-06) * paragraphs [0038] - [0041] * | 1-12 | |
| A | EP 3 091 734 A1 (SYNOLOGY INC [TW]) 9 November 2016 (2016-11-09) * abstract * * figures 2,3 * * paragraphs [0022] - [0023] * * claims 1,2,7,8 * | 1-12 | TECHNICAL FIELDS SEARCHED (IPC) H04N G06K G06T G08B |

~~The present search report has been drawn up for all claims~~

| Place of search | Date of completion of the search | Examiner |
|---|---|---|
| The Hague | 8 June 2018 | Sery, Franck |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.........................................................................

& : member of the same patent family, corresponding document

EPO FORM 1503 03.82 (P04C01)

Europäisches
Patentamt

European
Patent Office

Office européen
des brevets

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-12

☐ The present supplementary European search report has been drawn up for those parts of the European patent application which relate to the invention first mentioned in the claims (Rule 164 (1) EPC).

**Europäisches Patentamt**
**European Patent Office**
**Office européen des brevets**

## LACK OF UNITY OF INVENTION
## SHEET B

Application Number

EP 17 20 4266

The Search Division considers that the present European patent application does not comply with the requirements of unity of invention and relates to several inventions or groups of inventions, namely:

```
1. claims: 1-12

    Selection of preset orientations in a camera surveillance
    based on statistics of events in images of each orientations
                             ---

2. claims: 13-15

    Operating the camera with different quality parameters in
    consecutive time intervals
                             ---
```

## ANNEX TO THE EUROPEAN SEARCH REPORT
## ON EUROPEAN PATENT APPLICATION NO.

EP 17 20 4266

This annex lists the patent family members relating to the patent documents cited in the above-mentioned European search report.
The members are as contained in the European Patent Office EDP file on
The European Patent Office is in no way liable for these particulars which are merely given for the purpose of information.

08-06-2018

| Patent document cited in search report | | | Publication date | Patent family member(s) | | | Publication date |
|---|---|---|---|---|---|---|---|
| EP 3024227 | | A1 | 25-05-2016 | CN | 105611230 | A | 25-05-2016 |
| | | | | EP | 3024227 | A1 | 25-05-2016 |
| | | | | JP | 2016100696 | A | 30-05-2016 |
| | | | | US | 2016142680 | A1 | 19-05-2016 |
| US 2010208064 | | A1 | 19-08-2010 | NONE | | | |
| WO 2011002775 | | A1 | 06-01-2011 | CN | 102577347 | A | 11-07-2012 |
| | | | | EP | 2449760 | A1 | 09-05-2012 |
| | | | | US | 2012098927 | A1 | 26-04-2012 |
| | | | | WO | 2011002775 | A1 | 06-01-2011 |
| EP 3091734 | | A1 | 09-11-2016 | CN | 106060453 | A | 26-10-2016 |
| | | | | EP | 3091734 | A1 | 09-11-2016 |
| | | | | TW | 201637439 | A | 16-10-2016 |
| | | | | US | 2016309121 | A1 | 20-10-2016 |

EPO FORM P0459

For more details about this annex : see Official Journal of the European Patent Office, No. 12/82